# EUROPÄISCHE PATENTSCHRIFT

(11) **EP 1 188 341 B1**
(45) Veröffentlichungstag und Bekanntmachung des Hinweises auf die Patenterteilung: **09.07.2008**
(21) Anmeldenummer: 00951210.4
(22) Anmeldetag: 16.06.2000
(51) Int. Cl.: H04Q 7/38

(54) **VERFAHREN UND EINRICHTUNG ZUM ZUGANG ZU EINEM TELEKOMMUNIKATIONSNETZ UND ZUR ABRECHNUNG VON TELEKOMMUNIKATIONSDIENSTLEISTUNGEN**
METHOD AND DEVICE FOR ACCESSING A TELECOMMUNICATIONS NETWORK AND FOR BILLING TELECOMMUNICATIONS SERVICES
PROCEDE ET DISPOSITIF D'ACCES A UN RESEAU DE TELECOMMUNICATIONS ET DE TARIFICATION DE SERVICES DE TELECOMMUNICATIONS

(30) Priorität: 21.06.1999 DE 19928343; 15.03.2000 DE 10012392
(43) Veröffentlichungstag der Anmeldung: 20.03.2002
(73) Patentinhaber: T-Mobile Deutschland GmbH, 53227 Bonn (DE)
(72) Erfinder: BRUNE, Peter, D-53340 Meckenheim (DE); FEUSER, Ulrike, D-53173 Bonn (DE); LANGER, Michael, London SW6 7UH (GB); LJUNGSTRÖM, Patrik, D-53639 Königswinter (DE); MICHEL, Uwe, D-53604 Bad Honnef (DE); MOHRS, Walter, D-53123 Bonn (DE); PTACEK, Wolfgang, D-53604 Bad Honnef (DE)
(74) Vertreter: Riebling, Peter
(86) Internationale Anmeldenummer: PCT/DE2000/001903
(87) Internationale Veröffentlichungsnummer: WO 2000/079822

(56) Entgegenhaltungen:
- WO-A-96/05706
- WO-A-98/34393
- US-A- 4 777 646

## Beschreibung

Die Erfindung betrifft ein Verfahren und eine Einrichtung zum Zugang zu einem Telekommunikationsnetz und zur Abrechnung von Telekommunikationsdienstleistungen gemäss dem Oberbegriff des unabhängigen Patentanspruchs.

Die beschriebene Erfindung stellt den klassischen Mechanismen von Netzbetreibern (i.d.R. Mobilfunk), ihren Kunden Dienstleistungen zur Verfügung zu stellen und für die Bereitstellung derselbigen Entgelte zu nehmen, neue Prozesse entgegen. Es geht in diesem Zusammenhang primär um neue Zugangsmechanismen und -medien zum (mobilen) Telekommunikationsnetz, veränderte Sicherheitsmechanismen sowie um innovative Zahlverfahren. Der Vereinfachung halber wird die Erfindung im folgenden anhand von Mobilfunknetzen des GSM-Standards beschrieben, ist jedoch auch auf andere Telekommunikationsnetze anwendbar, soweit die in der Beschreibung gemachten Randbedingungen auch auf diese Netze anwendbar sind.

Allgemein kann gesagt werden, dass ein Mobilfunkbetreiber mittels seines Telekommunikationsnetzes eine Infrastruktur bereitstellt, die die Nutzung bestimmter Dienstleistungen (primär Telefonie) ermöglicht. Diese Dienstleistungen können von beliebigen Teilnehmern unter der Erfüllung gewisser Randbedingungen gegen Entgelt genutzt werden. Der Netzbetreiber entscheidet in jedem einzelnen Fall, welchem Teilnehmer er den Zugang zu seinem Telekommunikationsnetz (und damit zu seinen Diensten) erlaubt und welchen er von der Inanspruchnahme der mit dem Zugang verbundenen Dienstleistungen ausschließt. Im klassischen Fall gibt es zwei Ansätze die einem Teilnehmer eine Zugangsberechtigung zu einem Telekommunikationsnetz erlauben:
a) auf Subskriptionsbasis:
   Der Teilnehmer schließt einen Vertrag mit einem Heimat-Netzbetreiber (Home Operator) ab, der dem Teilnehmer für die Vertragslaufzeit die Nutzung bestimmter Dienstleistungen ermöglicht. Typisch für diesen Ansatz ist, dass der Nutzer i.d.R. einen kontinuierlichen Grundbetrag und für die Inanspruchnahme von Dienstleistungen ein mengenabhängiges Entgelt entrichtet. Die Bezahlung erfolgt i.d.R. auf kreditorischer Basis per (Monats)Rechnung.
b) auf Prepaidbasis:
   Der Teilnehmer kauft beim Home Operator eine bestimmte Art und Menge an Dienstleistungen ein und bezahlt diese im Voraus. Dafür steht ihm die Nutzung des Netzes und der jeweiligen Dienstleistungen bis zu dem vereinbarten, eingekauften Umfang zu. Der Netzbetreiber überprüft die Art und Menge der genutzten Dienste und entzieht dem Teilnehmer nach Verbrauch seines eingekauften Kontingents wieder die Zugangsberechtigung.

Speziell für GSM-Mobilfunknetze existieren für die Nutzung von Telekommunikationsdiensten zwei Varianten:
a) Der Teilnehmer nutzt ausschließlich die Infrastruktur des Home Operators. Das Entgelt für die Nutzung wird nach einem der obigen Verfahren entrichtet.
b) Der Teilnehmer nutzt zumindest teilweise die Infrastruktur eines anderen Netzbetreibers (Visited Operator). Das Entgelt wird an den Home Operator nach obigen Verfahren entrichtet. Darüber hinaus werden, ohne Einflussnahme des Teilnehmers, für die Inanspruchnahme des Fremdnetzes entsprechende Ausgleichszahlungen zwischen den Operatoren geleistet (Roaming Fall).

Die beschriebenen Ansätze machen deutlich, dass die Kontrolle des Netzbetreibers über die Zugangsberechtigung des Teilnehmers eine zentrale Funktion darstellt. Sowohl im Fall der ausschließlichen Nutzung des Heimatnetzes als auch im Roaming Fall bei der Nutzung eines fremden Netzes sind für GSM Mechanismen definiert, die die Identität und Authentizität des Teilnehmers sicherstellen. Das technische Medium, welches dieses ermöglicht, ist die Chipkarte oder Teilnehmeridentitätsmodul (SIM) in Kombination mit Daten im Netz, z.B. Daten, die im Heimatregister (HLR), dem Authentikationszentrum (AC) oder den Besucherregistern (VLR) abgelegt sind. Letztendlich stellt die SIM die Basis dar, die es dem Operator (Home oder Visited) erlaubt, die Zugangsberechtigung des Teilnehmers zu überprüfen.

Die WO 98 34393 offenbart ein "Prepay" Telekommunikationssystem, welches eine "Prepay" Anrufmanagementplattform aufweist, die direkt an eine Vermittlungsstelle angebunden ist und eine Teilnehmerdatenbank zur Speicherung von Teilnehmerdaten sowie Einrichtungen zur "Prepay" Zahlungsabwicklung aufweist. "Prepay" Anrufe werden zunächst an die Anrufmanagementplattform geleitet, wo das Guthabenkonto des Teilnehmers überprüft wird. Weist das Guthabenkonto einen ausreichenden Betrag auf, wird das Gespräch an die Vermittlungsstelle übergeben, welche die gewünschte Verbindung herstellt. Wird von der Anrufmanagementplattform ein unregistrierter Roaming Anruf erkannt, werden dem Roamingteilnehmer verschiedene Zahlungsmöglichkeiten zur Auswahl angeboten. Wird vom Teilnehmer z.B. die Zahlungsart mittels Kreditkarte ausgewählt, muss er die Kreditkartennummer der Anrufmanagementplattform mitteilen, welche die Kreditkartennummer überprüft und den Verbindungswunsch bei erfolgreicher Prüfung freigibt.

Es ist Aufgabe der Erfindung, ein System und Verfahren zum Zugang zu Telekommunikationsnetzen und zur Abrechnung von Telekommunikationsdienstleistungen vorzuschlagen, das gegenüber den klassischen Mechanismen einfacher und sowohl für den Netzbetreiber als auch für den Teilnehmer bequemer ist.

Diese Aufgabe wird durch die kennzeichnenden Merkmale des unabhängigen Patentanspruchs gelöst.

Vorteilhafte Ausgestaltungen der Erfindung sind in den abhängigen Ansprüchen angegeben.

Der klassische Ansatz stellt über die beschriebenen Zugangsmechanismen im Grunde zwei Sachen sicher:
a) Der Netzbetreiber weiß, wer der Teilnehmer ist.
b) Der Netzbetreiber weiß, dass und wie er das Entgelt für die in Anspruch genommene Dienstleistung bekommt (oder schon bekommen hat).

Substantiell betrachtet ist eigentlich nur der Punkt b) entscheidend. Dies wird gemäss der Erfindung ebenfalls sichergestellt, wobei jedoch der klassische Ansatz verlassen wird.

Erfindungsgemäß gilt wie im klassischen Fall:
- der Netzbetreiber stellt eine Infrastruktur und Dienste bereit;
- gegen Entgelt können diese genutzt werden;
- der Netzbetreiber kontrolliert den Zugang zu seinen Diensten.

Im Gegensatz zu den beiden klassischen Möglichkeiten, über Subskription oder Vorauszahlung (Prepaid) die Zugangsberechtigung zum Netz zu erhalten, ist erfindungsgemäß folgendes vorgesehen:

Der Teilnehmer muss im Voraus (oder im Nachhinein) dem Netzbetreiber auf irgendeine Art und Weise nachweisen (oder diesen überzeugen), dass eine Bezahlung der in Anspruch genommenen (oder zu nehmenden) Dienstleistung geleistet wird (oder bereits geleistet wurde), indem er:
a) zweifelsfrei seine Identität und eine damit verbundene Verlässlichkeit nachweist (z.B. "Ich bin der Bundeskanzler der Bundesrepublik Deutschland"), z.B. durch eine digitale Signatur;
b) direkt über vertrauensvolle Mechanismen bezahlt (EC-Karte, Elektronische Börse)
c) zweifelsfrei seine Verbundenheit zu einer vertraulichen, dritten Partei nachweist, die für die Bezahlung einsteht (z.B. Kreditkartenorganisation).

Kann der Teilnehmer eine der oben genannten Ansprüche a), b) oder c) erfüllen, so ist primär dem Anspruch des Netzbetreibers, ein Entgelt vom Teilnehmer zu erhalten, genüge getan. Je nach realisiertem Verfahren und Prozessumfeld ist sogar der Punkt "Wer ist der Teilnehmer?" zu erfüllen, was allerdings nicht zwingend erforderlich ist.

Je nach Ausprägung und Realisierungsvariante sind die Ansprüche des Netzbetreibers bzgl. der Bezahlsicherheit des Teilnehmers sicherlich unterschiedlich, auch im Vergleich zum klassischen Ansatz. Das Maß an Sicherheit liegt allerdings alleine im Ermessen des Netzbetreibers. Zur Verdeutlichung dieser Tatsache dient der klassische Ansatz im GSM Netz, wo der Netzbetreiber
- über die technische Sicherheit der SIM entscheidet;
- frei über den Authentikationsalgorithmus entscheidet (auch die Auswahl eines einfachen "XOR-Algorithmus'' wäre erlaubt);
- die individuellen Teilnehmerschlüssel (Ki) selbst bestimmt (auch ein konstanter Schlüssel für alle seine Teilnehmer wäre erlaubt);
- entscheidet über das Sicherheitslevel des gesamten Schlüsselmanagementprozesses (Generierung, Transport, Speicherung).

Gemäss der Erfindung ist vorgesehen, als Bezahlmedium eine Kreditkarte zu verwenden. Bisherige Anwendungen, die den Einsatz von Kreditkarten als Bezahlmedium in Telekommunikationsnetzen beschreiben, setzen alle voraus, dass der Teilnehmer eine prinzipielle Zugangsberechtigung zu einem Telekommunikationsnetz besitzt, die er vorab bereits durch eine der obigen Varianten (Subskription, Prepaid) erworben hat. Das Bezahlen per Kreditkarte ist in diesen Fällen als Methode anzusehen, wo Dienstleistungen (vorwiegend dritter Parteien) auf diesem Weg (eben über die Kreditkarte) abgerechnet werden. Dabei gibt es eine Bandbreite an Realiserungsmöglichkeiten, die sich in Sicherheit und Benutzerfreundlichkeit unterscheiden. Beispielsweise seien die folgenden Varianten genannt:
- der Teilnehmer nennt einem Sprachserver seine Kreditkartennummer;
- er verwendet die Tastatur (DTMF-Töne) zur Eingabe seiner Kreditkartennummer;
- er verschickt eine SMS an einen speziellen Server mit seinen Kreditkartendaten;
- anhand seiner MSISDN oder lMSl wird eine Zuordnung zu seiner Kreditkarte hergestellt (die der Teilnehmer vorab dem Netzbetreiber bekannt gemacht hat).

Neu an dem hier beschriebenen Verfahren ist, dass einem Teilnehmer die Inanspruchnahme von Telekommunikationsdienstleistungen auch ohne gültige (klassische) Zugangsberechtigung ermöglicht wird, indem er z.B. mittels Kreditkarte gegenüber dem Netzbetreiber seine Bonität nachweist.

Beim Identifikationsprozess über die Kreditkarte sind wiederum verschiedene Varianten denkbar:
a) Der (im Telekommunikationsnetz nicht registrierte) Teilnehmer erhält Zugang nur zu einem bestimmten Ziel (evtl. mittels jeder beliebigen Rufnummer), unter dem er sich mittels Eingabe seiner Kreditkartennummer identifizieren kann (i.d.R. auf "per Call Basis"). Dies kann gewisse Plausibilitäts- und Sicherheitschecks mit einschließen, wie z.B. Passwortschutz, die Eingabe zusätzlicher persönlicher Daten, online-check der Daten bei der Kreditkartenorganisation etc..
b) Der Teilnehmer erhält das Recht auf abgehende Kurznachrichten und kann sich in ähnlicher Weise wie unter a) registrieren.
c) Für den Fall, dass die Kreditkarte chipkartenbasiert ist, übermittelt der Teilnehmer seine Kreditkartendaten elektronisch, also direkt mit seiner Kreditkarte. Dies kann auf verschiedene Weise geschehen:
   - das Endgerät erlaubt einen Zugriff auf einen zweiten Kartenleser, in dem die Kreditkarte des Teilnehmers steckt
   - das Endgerät akzeptiert die Kreditkarte anstelle der SIM. Anstatt der lMSl (wie in GSM) wird die Kreditkartennummer ganz oder teilweise bei der Registrierungsprozedur an das Netz geschickt. Der Netzbetreiber muss dabei in der Lage sein, diesen Fall von der klassischen Registrierungsprozedur zu unterscheiden.
d) Der Netzbetreiber kann selbst eine Zuordnung zwischen der (nicht im klassischen Sinn registrierten) SIM zu einer Kreditkarte vornehmen. Dies bedarf einer vorherigen, einmaligen Prozedur, bei der diese Zuordnung hergestellt wird.

Um nicht telefonierfähigen (im klassischen Sinne) Teilnehmern eine Dienstleistung (i.d.R. Telefonie) zu ermöglichen, sind je nach Ausprägung des Ansatzes bestimmte Systemvoraussetzungen zu schaffen (hier am Beispiel GSM), die die folgenden Forderungen erfüllen:
- einem nicht roamingfähigen oder nicht registrierten oder nicht authentischem Teilnehmer ist ein Zugang zum Telekommunikationsnetz zu gewähren
- der Zugang erlaubt nur eingeschränkte Funktionalität (z.B. nur abgehende Calls (MoC)) zu einem bestimmten Ziel
- über den Zugang wird ein Bezahlverfahren mittels Kreditkarte bereitgestellt
- eine über die Kreditkarte vorgenommene, sichere Identifizierung des Teilnehmers erlaubt ihm die eingeschränkte Nutzung des Netzes (z.B. MoCs)
- die Abrechnung der Dienstleistung basiert auf der Nutzung der Kreditkarte (z.B. auf dem Kreditkartenkonto)

Das beschriebene Verfahren eröffnet sowohl den Teilnehmern als auch dem Netzbetreiber neue Möglichkeiten bzgl. Dienstenutzung und gegenseitiger Geschäftsbeziehung und weist mehrere Vorteile auf.
Für den Teilnehmer, der in Besitz einer Kreditkarte ist, birgt dieses Verfahren den Vorteil, ohne gültiges (Telekommunikations-)Teilnehmerverhältnis oder ohne gültige Roamingberechtigung dennoch die Dienstleistungen eines Netzbetreibers in Anspruch zu nehmen. Für den Netzbetreiber hat dies ebenfalls einen wesentlichen Vorteil. Die Dienstleistungen, die der Netzbetreiber den (Mobilfunk-)Teilnehmem zur Verfügung stellt, bedürfen keiner Registrierung. Registrierungen heißen für den Netzbetreiber die Bereitstellung entsprechender Systemressourcen, was wiederum sehr kostenintensiv ist. So bindet jede personalisierte SIM, auch wenn sie noch nicht aktiviert ist - also noch keine MSISDNs und Dienste zugeordnet bekommen hat - Ressourcen in HLR/AC oder im Kartenmanagementsystem KMS. Da diese Ressourcen einerseits teuer sind andererseits auch numerisch begrenzt sind (Nummembereiche für MSISDN), verbieten sich gewisse Ansätze, wie zum Beispiel eine großzügige Lagerhaltung von SIMs oder das großflächige Verteilen von Karten in die Fläche.

Nicht registrierte SIMs heben diese Restriktionen zum großen Teil auf. So ist es durchaus vorstellbar, sogenannte "Simple-SIMs" in großer Anzahl an Endkunden oder Points of Sales zu verteilen, was ganz andere Vertriebswege eröffnen würde. Unter einer Simple-SIM ist im einfachsten Fall eine Chipkarte zu verstehen, die als einzige Funktionalität die Fähigkeit besitzt, einem Endgerät die Registrierungsprozedur zu ermöglichen, indem es eine IMSI zur Verfügung stellt. Die lMSl muss weder beim Netzbetreiber registriert sein noch muss die Simple-SIM authentisieren können, denn - wie oben beschrieben - fängt der Netzbetreiber diesen "Makel" ab und bietet bei diesen Karten die Registrierung per Kreditkarte an.
Z.B. kann vorgesehen sein, dass jeder Kreditkarten-Kunde mit seiner Monatsrechnung eine Simple-SIM zugesandt bekommt. Diese Simple-SIM ist in einem Mobiltelefon einsetzbar und erlaubt den (eingeschränkten) Zugang zu einem Mobilfunknetz, indem die Registrierung über die Kreditkarte abgewickelt wird. Die Abrechnung der in Anspruch genommenen Telekommunikationsdienstleistungen erfolgt ebenfalls über die Kreditkarte.
Durch den Wegfall der Notwendigkeit, per Vertrag eine Subskription abzuschließen, ist es durchaus vorstellbar, die Simple-SIMs auch über Kioske, Tankstellen, Handelsketten etc. zu vertreiben.
Ebenso bietet es sich an, mit Endgeräteherstellem Agreements zu schließen, so dass diese ihre Endgeräte bereits mit einer Simple-SIM eines Netzbetreibers ausliefern. Dies liegt sowohl im Interesse des Netzbetreibers als auch im Interesse des Endgeräteherstellers und Endkunden, da das Endgerät bereits ohne Abschluss eines Subskriptionsvertrags telefonierfähig ist.

Eine Variante kann zum Beispiel darin bestehen, die Simple-SIM schon so zu gestalten, dass sie in eine reguläre SIM umgewandelt werden kann, falls sich der Teilnehmer entschließt, einen Subskriptionsvertrag mit dem Netzbetreiber einzugehen. Dies kann erreicht werden, indem man nachträglich Funktionen auf der SIM aufbringt (over-the-air) oder freischaltet, sowie im Netz die Kartendaten in die entsprechenden Systeme einbringt oder freischaltet.

Nachfolgend wird die Erfindung anhand zweier Ausführungsbeispiele unter Bezugnahme auf die Zeichnungsfiguren näher erläutert. Dabei ergeben sich weitere Merkmale und Vorteile der Erfindung. Es zeigen:
- Figur 1:: Einbuchung ins GSM-Netz mittels Error-Auswertung des HLRs;
- Figur 2:: Identifizierung und Rufaufbau über Kreditkarten-Server (CC-Server);
- Figur 3:: Einbuchen ins GSM-Netz mittels Simple-SIM und Simple-HLR.

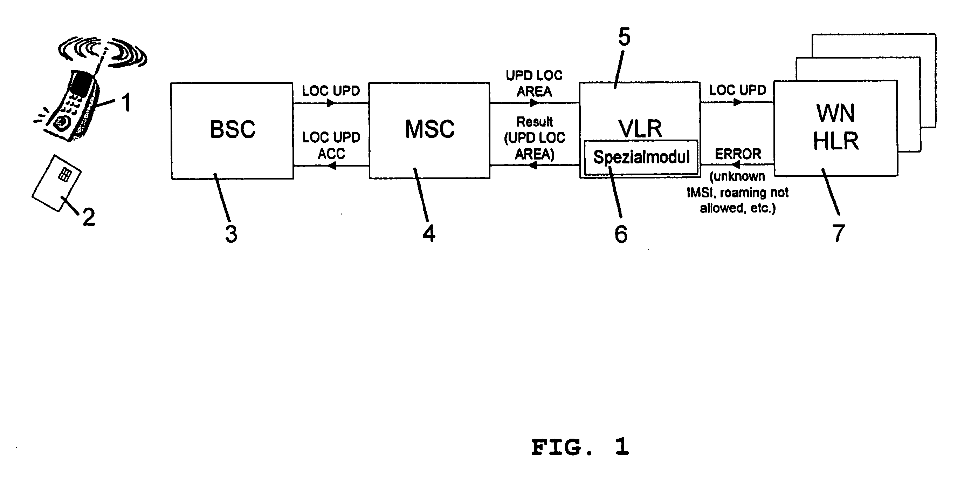

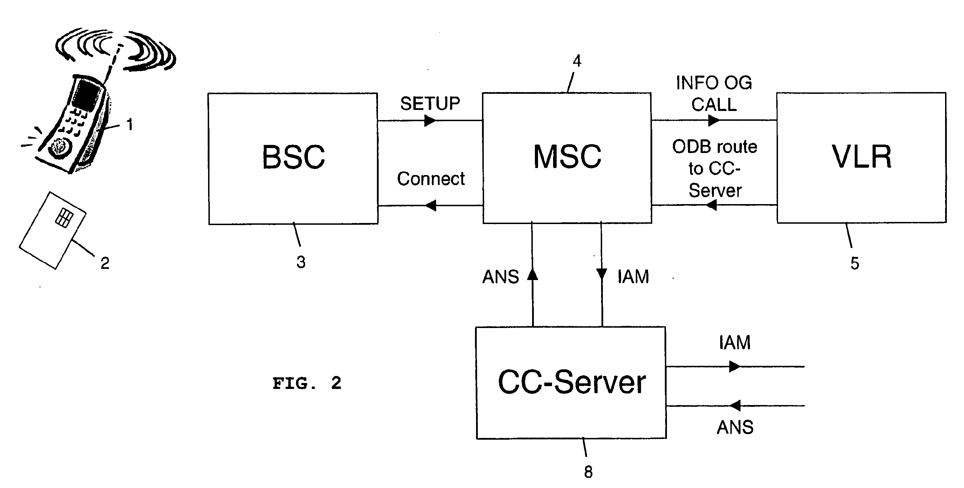

Die folgenden Abbildungen 1 und 2 zeigen eine erste Implementierungsvariante der Erfindung. Figur 1 zeigt ein Beispiel für eine Einbuchprozedur und die damit verbundenen Systemanpassungen und Figur 2 beschreibt den Identifikationsprozess eines Teilnehmers mittels Kreditkarte.

Erfindungsgemäß wird einem Teilnehmer auch ohne gültige SIM eine Dienstenutzung im Mobilfunknetz ermöglicht. Technisch wird dabei an der Stelle eingegriffen, wo im klassischen Fall die Identifikations- und Authentikationsprozeduren des Netzbetreibers einsetzen.

Nehme man als Beispiel den Fall gemäß Figur 1, dass eine ungültige SIM 2 im Endgerät 1 verwendet wird und damit versucht wird, sich Zugang zu einem (GSM) Mobilfunknetz zu verschaffen. Ungültige SIM heißt in diesem Zusammenhang:
- nicht registriert (dem Home Operator unbekannte IMSI)
- nicht Roaming-fähig (die lMSl gehört einem Home Operator, der dem Teilnehmer keine Roaming Erlaubnis erteilt hat)
- nicht authentisch (die Authentikationsprozedur scheitert, z.B. wegen falschem Ki)

In allen Fällen schickt im klassischen Fall der Netzbetreiber dem Endgerät 1 eine entsprechende Fehlermeldung und verweigert den Zugang zu seiner Infrastruktur (eine Ausnahme bildet lediglich der Notruf "112").

Der neue Ansatz ändert das bisherige Verfahren insofern ab, dass der Netzbetreiber zwar registriert, dass die verwendete SIM 2 keine Zugangsberechtigung im klassischen Sinn besitzt, er dem Teilnehmer jedoch nicht prinzipiell den Zugang verweigert. Vielmehr bietet der Netzbetreiber dem Teilnehmer mittels geeigneter Prozeduren an, sich alternativ z.B. über seine Kreditkarte zu identifizieren. Ist die Identifikation im Sinne des Netzbetreibers erfolgreich, so bietet dieser dem Teilnehmer ein gewisses Spektrum an Diensten an. Eine gewisse "Bezahlgarantie" erreicht der Netzbetreiber einerseits durch die Sicherheit des definierten Identifikationsmechanismus wie auch durch die üblichen Bezahlgarantien von Kreditkartenfirmen bei Inanspruchnahme von Dienstleistungen ihrer Kunden.

Ein Person möchte sich über ein Mobilfunkendgerät 1 in einem Mobilfunknetz einbuchen und über dieses Mobilfunknetz telefonieren. Der Teilnehmer besitzt ein Teilnehmeridentifikationsmodul 2 (SIM), die eine Internationale Mobilteilnehmerkennung (lMSl) enthält, wobei angenommen wird, dass die IMSI nicht in dem betreffenden Mobilfunknetz registriert ist und die SIM im betreffenden Mobilfunknetz nicht roaming-berechtigt ist. Das bedeutet, dass sich die Person mittels der SIM 2 normalerweise nicht im betreffenden Mobilfunknetz einbuchen und dessen Dienste in Anspruch nehmen kann.

Erfindungsgemäß ist dies nun doch möglich, indem zunächst eine Anmeldung des Endgeräts 1 bei der zuständigen Basisstationssteuerung 3 (BSC) erfolgt. Da das Endgerät 1 bzw. SIM 2 bisher nicht registriert ist, wird zunächst eine Location Update Prozedur über die Mobilvermittlungsstelle 4 (MSC) und das Besucherregister 5 (VLR) zum Heimatregister 7 (HLR) angestoßen, bei der u.a. die auf der SIM 2 abgelegte lMSl an das HLR 7 übergeben wird. Das HLR 7 prüft, ob die lMSl registriert ist - in diesem Falle nicht - und sendet eine Fehlermeldung (ERROR) an das VLR 5 zurück, dass die lMSl nicht bekannt ist.
Im VLR ist ein Spezialmodul 6 angeordnet, dessen Aufgabe es ist, diese speziellen Fehlermeldungen abzufangen, auszuwerten und entsprechend vorgegebene Aktionen auszulösen.
Gleichzeitig werden die normalerweise durchgeführten Authentisierungs- und Cypherprozeduren abgeschaltet und die Location Update Prozedur abgeschlossen, indem dem Endgerät die erfolgte, vereinfachte Aufenthaltsregistrierung positiv bestätigt wird.

Figur 2 zeigt den Rufaufbau nach erfolgter Anmeldung des Endgeräts 1 bzw. der SIM 2 beim Mobilfunknetz. Der Anrufwunsch des Endgeräts 1 wird über die BSC 3 und die MSC 4 an das VLR 5 weitergeleitet. Initiiert durch das Spezialmodul 6, das eine spezielle Behandlung des Anrufwunsches auslöst, erfolgt zunächst ein Sperren (ODB: Operator Determined Barring) des weiteren Verbindungsaufbaus zur gewünschten Rufnummer. Stattdessen wird der Ruf mittels eines festgelegten Routings zu einem speziell eingerichteten Kreditkarten-Server 8 (CC-Server) umgeleitet, der entweder Teil des Mobilfunknetzes ist, also vom Netzbetreiber verwaltet wird, oder extern an das Mobilfunknetz angebunden sein kann.

Der CC-Server 8 beginnt einen Dialog (Sprachdialog oder Textanzeige) mit dem Teilnehmer, in welchem der Teilnehmer aufgefordert wird, seine Kreditkartennummer und deren Verfallsdatum z.B. über die Tastatur des Endgeräts einzugeben. Diese Daten werden an den CC-Server weitergeleitet. Der CC-Server 8 überprüft die vom Teilnehmer gemachten Angaben (Gültigkeit, Sperrvermerke, etc.) der Kreditkarte und gibt im "Gut" Fall eine Freigabe an die Vermittlungsstelle MSC 4 bzw. das VLR 5, den Anrufwunsch des Teilnehmers durchzuschalten.
Es erfolgt nun ein regulärere Rufaufbau zu der vom Teilnehmer gewünschten Rufnummer, wobei die für diese Verbindung angefallnen Gebühren anhand der Kreditkartendaten des Teilnehmers durch den Netzbetreiber abgerechnet werden.

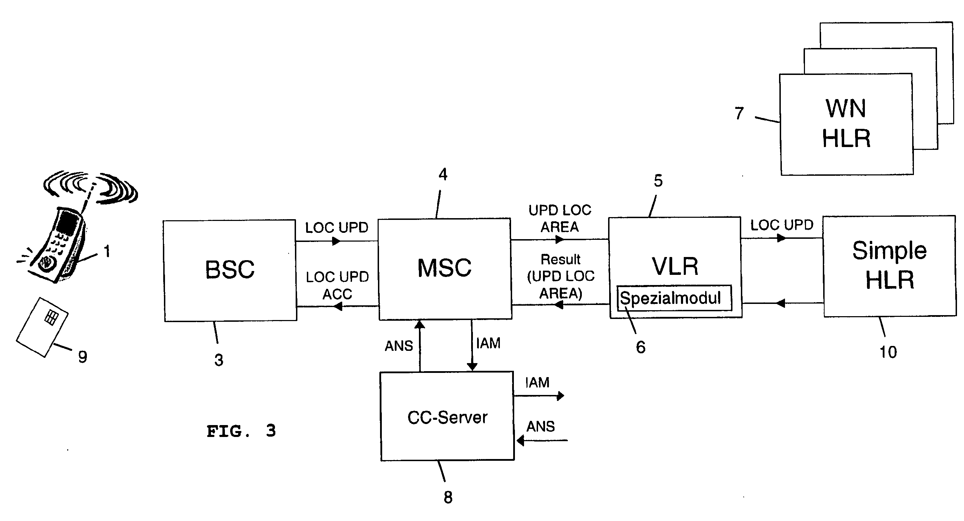

Eine spezielle Ausprägung der Erfindung gemäß Figur 3 verwendet als Zugangsmedium zum GSM-Netz vorzugsweise eine Chipkarte in Form einer sogenannten Simple-SIM 9, die im GSM-Netz des Home-Operators zwar registriert, jedoch gegenüber einer Standard-SIM 2 mit deutlich verringerter Funktionalität ausgestattet ist. Jede Simple-SIM besitzt eine besondere lMSl, die z.B. derart gewählt ist, dass sie die Simple-SIM eindeutig als solche kennzeichnet. Es wäre sogar möglich, für alle ausgegebenen Simple-SIMs dieselbe lMSl zu verwenden, da diese lMSl nicht zur Identifikation eines bestimmten Teilnehmers benötigt wird, sondern lediglich zur Identifikation einer Simple-SIM.

Selbst ein Ansatz, eine chipkartenbasierte Kreditkarte direkt als Zugangsmedium einzusetzen, wäre unter der Voraussetzung, dass das verwendete Endgerät dies unterstützt, möglich. Auch im Beispiel nach den Figuren 1 und 2 ist der Einsatz einer Simple-SIM 9 oder speziellen Kreditkarte denkbar

Netzseitig ist zusätzlich zum regulären HLR 7 ein sogenanntes Simple-HLR 10 eingerichtet, welches ausschließlich für die Registrierung der Simple-SIMs zuständig ist. Wie das reguläre HLR 7, muss auch das zur Registrierung der Simple-SIMs verwendete Simple-HLR 10 gewisse Funktionalitäten, insbesondere auf seinen Schnittstellen, besitzen, kann intern jedoch deutlich einfacher implementiert sein, und z.B. nur ein Standardteilnehmerprofil aufweisen, keine MSISDNs, vereinfachte Authentikationsmechanismen etc.). Zumindest muss das Simple-HLR 10 in der Lage sein, die den Simple-SiMs zugeordneten IMSIs als solche zu erkennen.

Analog zum Ausführungsbeispiel nach den Figuren 1 und 2 meldet sich das Endgerät bzw. die Simple-SIM 9 beim Mobilfunknetz an, indem zunächst eine Location Update Prozedur angestoßen wird. Anhand der von der Simple-SIM 9 übermittelten IMSI erkennt das Simple-HLR 10, dass eine besondere Behandlung dieses Verbindungswunsches (Teilnehmers) notwendig ist. Da jedoch dem Simple-HLR 10 die lMSl der Simple-SIM bekannt ist, wird ein reguläres Einbuchen des Endgeräts 1 in das Mobilfunknetz unter Anwendung der entsprechenden Authentisierungs- und Cypheringmechanismen zugelassen. Dabei können vereinfachte Authentisierungs- und Verschlüsselungsparameter verwendet werden, die mit konstanten, einheitlichen Challenge/Response-Paaren durchgeführt werden oder mit variablen Challenge/Response-Paaren, die durch kryptographische Verfahren im Simple-HLR 10 erzeugt werden.

Trotz erfolgter Authentisierung des Teilnehmers anhand seiner Simple-SIM 9 wird die Rufweiterschaltung vom Simple-HLR 10 zunächst gesperrt, indem eine Fehlermeldung (ERROR) an das VLR 5 zurückgegeben wird.

Das Spezialmodul 6 im VLR 5 sorgt dafür, dass die Error-Meldungen des Simple-HLR 10 entsprechend ausgewertet und umgesetzt werden. Bei der Verwendung von ODB-Meldungen wird der Anrufwunsch analog wie beim Ausführungsbeispiel nach den Figuren 1 und 2 nachfolgend auf einen Kreditkarten-Server 8 umgeleitet, wo die Identifizierung des Teilnehmers per Kreditkarte erfolgt. Der Teilnehmer kann dann die Zielrufnummer nachwählen, und der Rufaufbau zur gewünschten Zielrufnummer kann erfolgen. Bei der Verwendung eines IN-Triggers kann schon bei Anwahl des CC-Servers 8 die Zielrufnummer angewählt werden.

### Zeichnungslegende

- 1: Endgerät
- 2: SIM
- 3: Basisstationssteuerung (BSC)
- 4: Mobilfunkvermittlung (MSC)
- 5: Besucherregister (VLR)
- 6: Spezialmodul
- 7: Heimatregister (HLR)
- 8: Kreditkarten-Server (CC-Server)
- 9: Simple-SIM
- 10: Simple-HLR

## Patentansprüche

1. Verfahren zur Anmeldung eines Endgerätes (1) bei einem Telekommunikationsnetz und Abrechnung von Telekommunikationsdienstleistungen, wobei im Telekommunikationsnetz Authentikationsverfahren eingesetzt werden, die es einem Teilnehmer ermöglichen, zu irgend einem frei wählbaren Zeitpunkt nachzuweisen, dass eine Bezahlung von in Anspruch genommenen oder zu nehmenden Dienstleistung geleistet wird oder bereits geleistet wurde,
wobei die Anmeldung des Teilnehmers bei einer Basisstationssteuerung BSC (3) des Telekommunikationsnetzes mit Hilfe eines Endgeräts (1) und eines Teilnehmeridentitätsmoduls SIM (2; 9) erfolgt, das eine Mobilteilnehmerkennung IMSI enthält,
dass eine Location Update Prozedur über eine Mobilvermittlungsstelle MSC (4) und ein Besucherregister VLR (5) zu einem Heimatregister HLR (7; 10) angestoßen wird, bei der die auf der SIM (2; 9) abgelegte IMSI an das HLR (7; 10) übergeben wird, wobei das HLR (7; 10) prüft, ob die IMSI registriert ist und im negativen Fall eine Fehlermeldung an das VLR (5) zurücksendet, dass im VLR ist ein Modul (6) angeordnet ist, das die Fehlermeldung abfängt, auswertet und eine entsprechende Behandlung der Anmeldung des Teilnehmers auslöst, **dadurch gekennzeichnet,**
**dass** die normalerweise durchgeführten Authentisierungs- und Cypherprozeduren abgeschaltet und die Location Update Prozedur abgeschlossen wird, indem dem Endgerät die erfolgte, vereinfachte Aufenthaltsregistrierung positiv bestätigt wird,
**dass** ein Anrufwunsch des Endgeräts (1) über die BSC (3) und die MSC (4) an das VLR (5) weitergeleitet wird und initiiert durch das Modul (6), das eine entsprechende Behandlung des Anrufwunsches auslöst, zunächst ein Sperren des weiteren Verbindungsaufbaus zur gewünschten Rufnummer erfolgt, und stattdessen wird der Ruf mittels eines festgelegten Routings zu einem hierfür eingerichteten Kreditkarten-Server (8) umgeleitet wird, der die Gültigkeit einer Kreditkarte des Teilnehmer prüft, und im Fall einer gültigen Kreditkarte eine Authentifikation und Registrierung des Teilnehmers und eine Abrechnung der in Anspruch genommenen Dienstleistungen mittels der Kreditkarte erfolgt.

2. Verfahren nach Anspruch 1, **dadurch gekennzeichnet, dass** der Kreditkartenserver (8) einen Dialog mit dem Teilnehmer beginnt, in welchem der Teilnehmer aufgefordert wird, seine Kreditkartennummer und deren Verfallsdatum einzugeben, wobei diese Daten an den Kreditkarten-Server weitergeleitet werden und der Kreditkarten-Server die vom Teilnehmer gemachten Angaben der Kreditkarte überprüft und im "Gut" Fall eine Freigabe an die Vermittlungsstelle MSC (4) bzw. das VLR (5) gibt, den Anrufwunsch des Teilnehmers durchzuschalten.

3. Verfahren nach Anspruch 1 oder 2, **dadurch gekennzeichnet, dass** nachfolgend ein regulärer Rufaufbau zu der vom Teilnehmer gewünschten Rufnummer erfolgt, wobei die für diese Verbindung angefallenen Gebühren anhand der Kreditkartendaten des Teilnehmers durch den Netzbetreiber abgerechnet werden.

4. Verfahren nach einem der Ansprüche 1 bis 3, **dadurch gekennzeichnet, dass** das Heimatregister HLR (10) ein Teilnehmeridentüätsmodul (9) anhand der IMSI erkennt und ausschließlich zur Authentifikation und Registrierung der Teilnehmeridentifikationsmodule (9) für deren Anmeldung beim Telekommunikationsnetz dient.

5. Verfahren nach einem der Ansprüche 1 bis 4, **dadurch gekennzeichnet, dass** das Teilnehmeridentifikationsmodul (9) und das Heimatregister HLR (10) über eingeschränkte Funktionalitäten verfügen, indem sie dem Endgerät (1) des Teilnehmers ausschließlich eine Anmeldung beim Telekommunikationsnetz ermöglichen.

6. Verfahren nach einem der Ansprüche 1 bis 5, **dadurch gekennzeichnet, dass** der Kreditkarten-Server (8) entweder Teil des Telekommunikationsnetzes ist oder extern an das Telekommunikationsnetz angebunden ist.

## Claims

1. Method for the logging-on of a subscriber apparatus (1) in a telecommunications network and debiting telecommunications services, wherein in the telecommunications network are introduced authentication methods which enable the subscriber at any freely chosen point in time to establish that payment is going to be made or has already been made for services to be rendered or which have already been rendered, wherein the logging-on by the subscriber at a base station control BSC(3) of the telecommunications network takes place with the aid of a subscriber apparatus (1) and a subscriber identity module SIM (2;9) which contains a mobile subscriber recognition means IMSI,
that a location update procedure is activated via a mobile switching centre MSC (4) and a visitors' location register VLR (5) to a home location register HLR (7;10), in which the IMSI deposited on the SIM (2;9) is transferred to the HLR (7;10), wherein the HLR(7;10) checks whether the IMSI is registered and in the negative case sends back an error signal to the VLR (5),
that in the VLR is arranged a module (6) which intercepts and evaluates the error signal and triggers a corresponding procedure in the logging-on by the subscriber, **characterised in that** the normally carried out authentication and cipher procedures are switched off and the location update procedure is terminated, **in that** the simplified registration that has taken place is positively confirmed in the subscriber apparatus,
that a call request by the subscriber apparatus (1) is passed on to the VLR (5) via the BSC(3) and MSC(4) and initiated through the module (6), which triggers a corresponding processing of the call request, initially resulting in a blocking of the further connecting setup to the desired call number and instead the call is diverted by means of a fixed routing to a credit card server (8) equipped for this purpose which checks the validity of a credit card of the subscriber and in the case of a valid credit card this results in the authentication and registration of the subscriber and a debiting of the credit card for the services rendered.

2. Method according to claim 1, **characterised in that** the credit card server (8) starts a dialogue with the subscriber in which the subscriber is requested to input his credit card number and its expiry date, wherein these data are passed on to the credit card server and the credit card server checks the credit card details provided by the subscriber and in the "good" case permits a release to the mobile switching centre MSC(4) or the VLR(5) that the call request by the subscriber be switched through.

3. Method according to claim 1 or 2, **characterised in that** subsequently a regular call setup to the call number desired by the subscriber takes place, wherein the charges incurred for this connection are debited by the network operator by means of the credit card data of the subscriber.

4. Method according to one of the claims 1 to 3, **characterised in that** the home location register HLR(10) recognises a subscriber identity module (9) by means of the IMSI and serves exclusively for the authentication and registration of the subscriber identification module (9) for its logging-on in the telecommunications network.

5. Method according to one of the claims 1 to 4, **characterised in that** the subscriber identification module (9) and the home location register HLR(10) have limited functionalities **in that** they enable in the subscriber apparatus (1) of the subscriber exclusively a log-on in the telecommunications network.

6. Method according to one of the claims 1 to 5, **characterised in that** the credit card server (8) is either part of the telecommunications network or is externally connected to the telecommunications network.

## Revendications

1. Procédé pour l'entrée en communication d'un terminal (1) avec un réseau de télécommunication et pour la tarification de services de télécommunication, étant précisé qu'on utilise dans ce réseau des procédés d'authentification qui permettent à un abonné de prouver, à un moment quelconque pouvant être choisi librement, qu'un paiement de services auxquels il a eu recours ou aura recours va être effectué ou a déjà été effectué, que l'entrée en communication de l'abonné avec un gestionnaire de station de base BSC (3) dudit réseau se fait à l'aide d'un terminal (1) et d'un module d'identité d'abonné SIM (2 ; 9) qui contient une identification d'abonné mobile IMSI, qu'une procédure de localisation est déclenchée par l'intermédiaire d'un centre de commutation du service mobile MSC (4) et d'un enregistreur de localisation visité VLR (5) vers un enregistreur de localisation nominal HLR (7 ; 10), procédure pendant laquelle l'IMSI stockée sur le module SIM (2 ; 9) est transmise à l'enregistreur HLR (7 ; 10), que celui-ci vérifie que l'IMSI est enregistrée et, si ce n'est pas le cas, renvoie un message d'erreur à l'enregistreur VLR (5), et qu'il est prévu dans l'enregistreur VLR un module (6) qui intercepte et analyse le message d'erreur et déclenche un traitement approprié de l'entrée en communication de l'abonné,
**caractérisé en ce qu'**on arrête les procédures d'authentification et de chiffrage normalement exécutées et on achève la procédure de localisation en envoyant au terminal une confirmation positive de l'enregistrement de position effectué et simplifié,
**en ce qu'**un souhait d'appel du terminal (1) est transmis à l'enregistreur VLR (5) par l'intermédiaire du gestionnaire BSC (3) et du centre MSC (4), et à l'initiative du module (6), qui déclenche un traitement approprié du souhait d'appel, la poursuite de l'établissement de la communication avec le numéro d'appel souhaité est tout d'abord empêchée et au lieu de cela, l'appel est renvoyé à l'aide d'un acheminement fixé à un serveur pour cartes de crédit (8) installé à cet effet, qui contrôle la validité d'une carte de crédit de l'abonné, et dans le cas d'une carte de crédit valable, une authentification et un enregistrement de l'abonné ainsi qu'une facturation des services auquel il a eu recours ont lieu à l'aide de la carte de crédit.

2. Procédé selon la revendication 1, **caractérisé en ce que** le serveur pour cartes de crédit (8) entame avec l'abonné un dialogue lors duquel l'abonné est invité à entrer son numéro et la date de fin de validité de sa carte de crédit, ces données étant transmises au serveur pour cartes de crédit, lequel contrôle les indications de la carte de crédit fournies par l'abonné et, dans le cas où ces indications sont "bonnes", donne au centre de commutation MSC (4) ou à l'enregistreur VLR (5) l'autorisation d'établir la communication pour le souhait d'appel de l'abonné.

3. Procédé selon la revendication 1 ou 2, **caractérisé en ce qu'**un établissement de communication normal a ensuite lieu avec le numéro d'appel souhaité par l'abonné, les taxes produites pour cette communication étant facturées par l'exploitant du réseau à l'aide des données de carte de crédit de l'abonné.

4. Procédé selon l'une des revendications 1 à 3, **caractérisé en ce que** l'enregistreur de localisation nominal HLR (10) identifie un module d'identité d'abonné (9) à l'aide de l'IMSI et sert uniquement à authentifier et enregistrer les modules d'identification d'abonné (9) pour l'entrée en communication de ceux-ci avec le réseau de télécommunication.

5. Procédé selon l'une des revendications 1 à 4, **caractérisé en ce que** le module d'identification d'abonné (9) et l'enregistreur de localisation nominal HLR (10) disposent de fonctionnalités restreintes, en permettant au terminal (1) de l'abonné uniquement une entrée en communication avec le réseau de télécommunication.

6. Procédé selon l'une des revendications 1 à 5, **caractérisé en ce que** le serveur pour cartes de crédit (8) fait partie du réseau de télécommunication ou est connecté à celui-ci de manière externe.
